# EUROPEAN PATENT APPLICATION

(11) **EP 3 264 228 A1**
(43) Date of publication of application: **03.01.2018**
(21) Application number: 16177120.9
(22) Date of filing: 30.06.2016
(51) Int. Cl.: G06F 3/01, H04S 7/00

(54) **MEDIATED REALITY**

(71) Applicant: Nokia Technologies Oy, 02610 Espoo (FI)
(72) Inventor: LEPPÄNEN, Jussi, 33580 Tampere (FI); LEHTINIEMI, Arto, 33880 Lempäälä (FI); ERONEN, Antti, 33820 Tampere (FI); CRICRI, Francesco, 33200 Tampere (FI)
(74) Representative: Nokia EPO representatives

(57) **Abstract**

A method comprising: providing user-interactive, mediated reality by providing live display of a virtual visual scene of a virtual visual space to a user via a display, wherein the virtual visual space, comprising virtual objects, is at least partially defined by live video images of a real space, comprising persons, captured by multiple video cameras simultaneously from different perspectives; enabling the user to control a perspective determining the displayed virtual visual scene; enabling the user to select a sub-set of the persons in the real space for communication by performing a selection action in the virtual space; and enabling capturing of audio output from the user and directed communication of the captured audio to the sub-set of the persons but not other persons in the real space.

## Description

### TECHNOLOGICAL FIELD

Embodiments of the present invention relate to mediated reality for example augmented reality or virtual reality.

### BACKGROUND

Mediated reality in this document refers to a user experiencing or being capable of experiencing a fully or partially artificial environment.

Augmented reality is a form of mediated reality in which a user experiences a partially artificial, partially real environment. Virtual reality is a form of mediated reality in which a user experiences a fully artificial environment.

### BRIEF SUMMARY

According to various, but not necessarily all, embodiments of the invention there is provided a method comprising: enabling selection of a sub-set of objects in a real space for controlled communication in response to actions of a particular person; and enabling controlled communication to and/or from the sub-set of objects.

According to various, but not necessarily all, embodiments of the invention there is provided an apparatus comprising: means for enabling selection of a sub-set of objects in a real space for controlled communication in response to actions of a particular person; and means for enabling controlled communication to and/or from the sub-set of objects.

According to various, but not necessarily all, embodiments of the invention there is provided an apparatus comprising: at least one processor; and memory storing computer program instructions configured, working with the at least one processor, to cause the apparatus to: enable selection of a sub-set of objects in a real space for controlled communication in response to actions of a particular person; and enable controlled communication to and/or from the sub-set of objects.

According to various, but not necessarily all, embodiments of the invention there is provided computer program instructions that, when executed by at least one processor, cause the following to be performed: enabling selection of a sub-set of objects in a real space for controlled communication in response to actions of a particular person; and enabling controlled communication to and/or from the sub-set of objects.

The computer program instructions may be stored on a non-transitory computer readable medium.

According to various, but not necessarily all, embodiments of the invention there is provided a method comprising: providing user-interactive, mediated reality by providing live display of a virtual visual scene of a virtual visual space to a user via a display, wherein the virtual visual space, comprising virtual objects, is at least partially defined by live video images of a real space comprising objects and captured by multiple video cameras simultaneously from different perspectives; enabling the user to control a perspective determining the displayed virtual visual scene; enabling the user to select a sub-set of the objects in the real space for communication by performing a selection action in the virtual space; and enabling selective communication between the user and the sub-set of objects but not other objects in the real space.

According to various, but not necessarily all, embodiments of the invention there is provided an apparatus comprising: means for providing user-interactive, mediated reality by providing live display of a virtual visual scene of a virtual visual space to a user via a display, wherein the virtual visual space, comprising virtual objects, is at least partially defined by live video images of a real space comprising objects and captured by multiple video cameras simultaneously from different perspectives; means for enabling the user to control a perspective determining the displayed virtual visual scene; enabling the user to select a sub-set of the objects in the real space for communication by performing a selection action in the virtual space; and means for enabling selective communication between the user and the sub-set of objects but not other objects in the real space.

According to various, but not necessarily all, embodiments of the invention there is provided an apparatus comprising: at least one processor; and memory storing computer program instructions configured, working with the at least one processor, to cause the apparatus to: provide user-interactive, mediated reality by providing live display of a virtual visual scene of a virtual visual space to a user via a display, wherein the virtual visual space, comprising virtual objects, is at least partially defined by live video images of a real space comprising objects and captured by multiple video cameras simultaneously from different perspectives; enable the user to control a perspective determining the displayed virtual visual scene; enabling the user to select a sub-set of the objects in the real space for communication by performing a selection action in the virtual space; and enable selective communication between the user and the sub-set of objects but not other objects in the real space.

According to various, but not necessarily all, embodiments of the invention there is provided computer program instructions that, when executed by at least one processor, cause the following to be performed: providing user-interactive, mediated reality by providing live display of a virtual visual scene of a virtual visual space to a user via a display, wherein the virtual visual space, comprising virtual objects, is at least partially defined by live video images of a real space comprising objects and captured by multiple video cameras simultaneously from different perspectives; enabling the user to control a perspective determining the displayed virtual visual scene; enabling the user to select a sub-set of the objects in the real space for communication by performing a selection action in the virtual space; and enabling selective communication between the user and the sub-set of objects but not other objects in the real space.

The computer program instructions may be stored on a non-transitory computer readable medium.

According to various, but not necessarily all, embodiments of the invention there is provided a method comprising: providing user-interactive, mediated reality by providing live display of a virtual visual scene of a virtual visual space to a user via a display, wherein the virtual visual space, comprising virtual objects, is at least partially defined by live video images of a real space, comprising persons, captured by multiple video cameras simultaneously from different perspectives; enabling the user to control a perspective determining the displayed virtual visual scene; enabling the user to select a sub-set of the persons in the real space for communication by performing a selection action in the virtual space; and enabling capturing of audio output from the user and directed communication of the captured audio to the sub-set of the persons but not other persons in the real space.

According to various, but not necessarily all, embodiments of the invention there is provided an apparatus comprising: means for providing user-interactive, mediated reality by providing live display of a virtual visual scene of a virtual visual space to a user via a display, wherein the virtual visual space, comprising virtual objects, is at least partially defined by live video images of a real space, comprising persons, captured by multiple video cameras simultaneously from different perspectives; means for enabling the user to control a perspective determining the displayed virtual visual scene; means for enabling the user to select a sub-set of the persons in the real space for communication by performing a selection action in the virtual space; and means for enabling capturing of audio output from the user and directed communication of the captured audio to the sub-set of the persons but not other persons in the real space.

According to various, but not necessarily all, embodiments of the invention there is provided an apparatus comprising: at least one processor; and memory storing computer program instructions configured, working with the at least one processor, to cause the apparatus to: provide user-interactive, mediated reality by providing live display of a virtual visual scene of a virtual visual space to a user via a display, wherein the virtual visual space, comprising virtual objects, is at least partially defined by live video images of a real space, comprising persons, captured by multiple video cameras simultaneously from different perspectives; enable the user to control a perspective determining the displayed virtual visual scene; enable the user to select a sub-set of the persons in the real space for communication by performing a selection action in the virtual space; and enable capturing of audio output from the user and directed communication of the captured audio to the sub-set of the persons but not other persons in the real space.

According to various, but not necessarily all, embodiments of the invention there is provided computer program instructions that, when executed by at least one processor, cause the following to be performed: providing user-interactive, mediated reality by providing live display of a virtual visual scene of a virtual visual space to a user via a display, wherein the virtual visual space, comprising virtual objects, is at least partially defined by live video images of a real space, comprising persons, captured by multiple video cameras simultaneously from different perspectives; enabling the user to control a perspective determining the displayed virtual visual scene; enabling the user to select a sub-set of the persons in the real space for communication by performing a selection action in the virtual space; and enabling capturing of audio output from the user and directed communication of the captured audio to the sub-set of the persons but not other persons in the real space.

The computer program instructions may be stored on a non-transitory computer readable medium.

According to various, but not necessarily all, embodiments of the invention there is provided examples as claimed in the appended claims.

### BRIEF DESCRIPTION

For a better understanding of various examples that are useful for understanding the brief description, reference will now be made by way of example only to the accompanying drawings in which:
Figs 1A-1C and 2A-2C illustrate examples of mediated reality in which Figs 1A, 1B, 1C illustrate the same virtual visual space and different points of view and Figs 2A, 2B, 2C illustrate a virtual visual scene from the perspective of the respective points of view;
Fig 3A illustrates an example of a real space and Fig 3B illustrates an example of a real visual scene that partially corresponds with the virtual visual scene of Fig 1 B;
Fig 4 illustrates an example of an apparatus that is operable to enable mediated reality and/or augmented reality and/or virtual reality;
Fig 5A illustrates an example of a method for enabling mediated reality and/or augmented reality and/or virtual reality;
Fig 5B illustrates an example of a method for updating a model of the virtual visual space for augmented reality;
Figs 6A and 6B illustrate examples of apparatus that enable display of at least parts of the virtual visual scene to a user;
Fig 7A, illustrates an example of a gesture in real space and Fig 7B, illustrates a corresponding representation rendered, in the virtual visual scene, of the gesture in real space;
Fig. 8 illustrates an example of a system for modifying a rendered sound scene;
Fig. 9 illustrates an example of a module which may be used, for example, to perform the functions of the positioning block, orientation block and distance block of the system;
Fig. 10 illustrates an example of the system/module implemented using an apparatus;
Fig 11A illustrates an example of a method;
Fig 11B illustrates an example of a method for using mediated reality to enable a user through actions in a virtual space to select persons for selective audio communication in a real space, corresponding to the virtual space;
Figs 12A and 12B illustrate examples of a real space comprising persons;
Fig. 13A illustrates an example of a virtual visual scene that is defined by the captured live video images described in relation to Figs 12A,12B;
Fig. 13B illustrates an example of the consequences of the user performing the selection action in the virtual space;
Fig. 14 illustrates a system 800 suitable for performing the method of Fig 11 B;
Figs 15A to 17C illustrate examples of alternative selection actions performed by a user in the virtual space to select a sub-set of the persons in the real space for directed communications;
Figs 18A and 18B illustrate that a user may be able to select/deselect persons from the sub-set;
Fig. 19A illustrates an example of a gesture suitable for deselecting a person from the sub-set;
Fig. 19B illustrates an example of a gesture suitable for selecting a person for inclusion in the sub-set;
Fig 20 illustrates an example in which a particular person performs a selection action that causes selection of a sub-set of audio input objects recording audio from the real space; and
Fig. 21 illustrates an example of the consequences of the particular person performing the selection action.

### DEFINITIONS

"artificial environment" is something that has been recorded or generated
"virtual visual space" refers to fully or partially artificial environment that may be viewed, which may be three dimensional.
"virtual visual scene" refers to a representation of the virtual visual space viewed from a particular point of view within the virtual visual space.
"real space" refers to a real environment, which may be three dimensional.
"real visual scene" refers to a representation of the real space viewed from a particular point of view within the real space.
"mediated reality" in this document refers to a user visually experiencing a fully or partially artificial environment (a virtual visual space) as a virtual visual scene at least partially displayed by an apparatus to a user. The virtual visual scene is determined by a point of view within the virtual visual space and a field of view. Displaying the virtual visual scene means providing it in a form that can be seen by the user.
"augmented reality" in this document refers to a form of mediated reality in which a user visually experiences a partially artificial environment (a virtual visual space) as a virtual visual scene comprising a real visual scene of a physical real world environment (real space) supplemented by one or more visual elements displayed by an apparatus to a user;
"virtual reality" in this document refers to a form of mediated reality in which a user visually experiences a fully artificial environment (a virtual visual space) as a virtual visual scene displayed by an apparatus to a user;
"perspective-mediated" as applied to mediated reality, augmented reality or virtual reality means that user actions determine the point of view within the virtual visual space, changing the virtual visual scene;
"first person perspective-mediated" as applied to mediated reality, augmented reality or virtual reality means perspective mediated with the additional constraint that the user's real point of view determines the point of view within the virtual visual space;
"third person perspective-mediated" as applied to mediated reality, augmented reality or virtual reality means perspective mediated with the additional constraint that the user's real point of view does not determine the point of view within the virtual visual space;
"user interactive" as applied to mediated reality, augmented reality or virtual reality means that user actions at least partially determine what happens within the virtual visual space;
"displaying" means providing in a form that is perceived visually (viewed) by the user.
"rendering" means providing in a form that is perceived by the user
'virtual object' is an object within a virtual scene, it may be an artificial virtual object (e.g. a computer-generated virtual object) or it may be an image of a real object in a real space that is live or recorded.
"sound space" refers to an arrangement of sound sources in a three-dimensional space. A sound space may be defined in relation to recording sounds (a recorded sound space) and in relation to rendering sounds (a rendered sound space).
"sound scene" refers to a representation of the sound space listened to from a particular point of view within the sound space.
"sound object" refers to sound that may be located within the sound space. A source sound object represents a sound source within the sound space. A recorded sound object represents sounds recorded at a particular microphone.

"Correspondence" or "corresponding" when used in relation to a sound space and a virtual visual space means that the sound space and virtual visual space are time and space aligned, that is they are the same space at the same time.

"Correspondence" or "corresponding" when used in relation to a sound scene and a virtual visual scene means that the sound space and virtual visual space are corresponding and a notional listener whose point of view defines the sound scene and a notional viewer whose point of view defines the virtual visual scene are at the same position and orientation, that is they have the same point of view.
"virtual space" may mean a virtual visual space, mean a sound space or mean a combination of a virtual visual space and corresponding sound space.

### DESCRIPTION

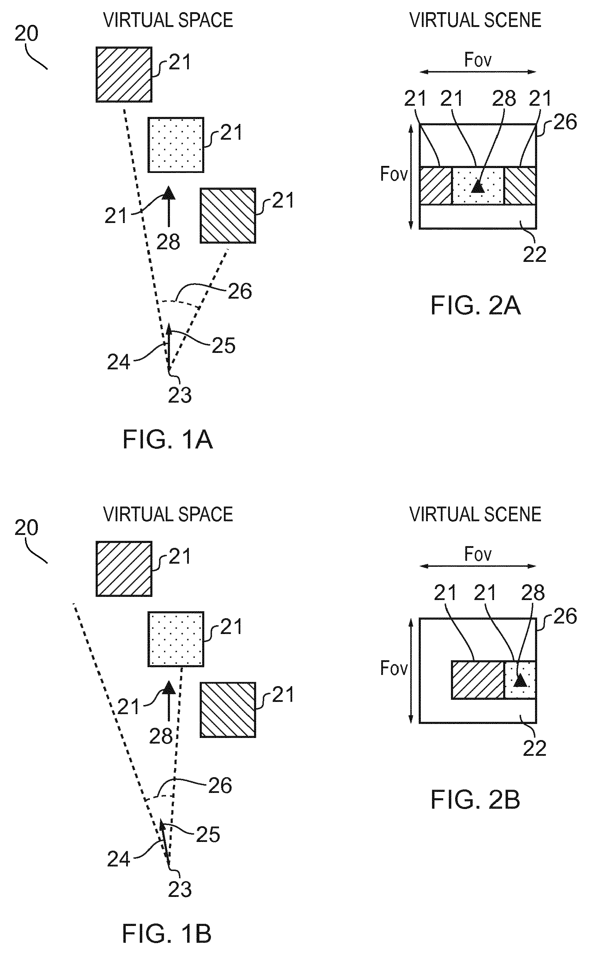

Figs 1A-1C and 2A-2C illustrate examples of mediated reality. The mediated reality may be augmented reality or virtual reality.

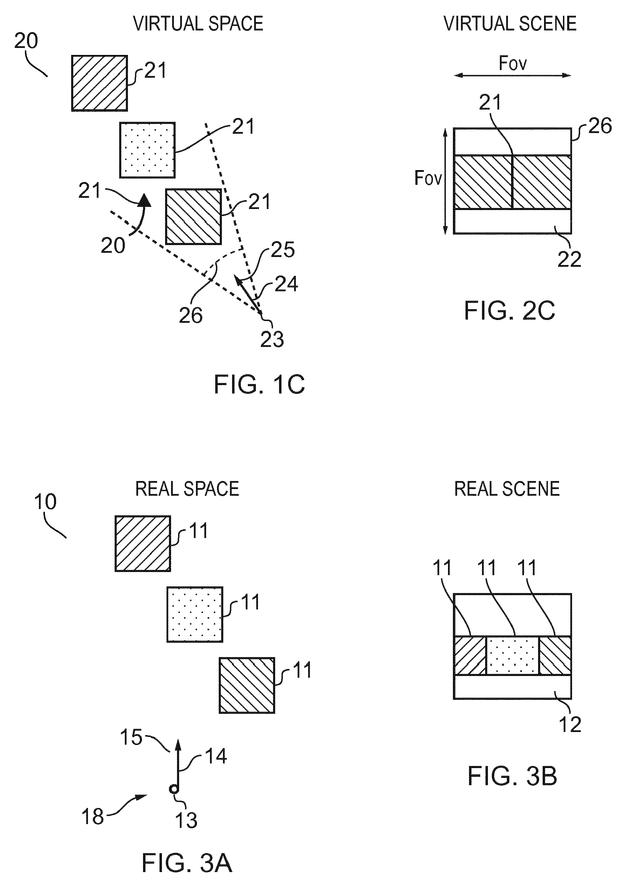

Figs 1A, 1B, 1C illustrate the same virtual visual space 20 comprising the same virtual objects 21, however, each Fig illustrates a different point of view 24. The position and direction of a point of view 24 can change independently. The direction but not the position of the point of view 24 changes from Fig 1A to Fig 1B. The direction and the position of the point of view 24 changes from Fig 1B to Fig 1C.

Figs 2A, 2B, 2C illustrate a virtual visual scene 22 from the perspective of the different points of view 24 of respective Figs 1A, 1B, 1C. The virtual visual scene 22 is determined by the point of view 24 within the virtual visual space 20 and a field of view 26. The virtual visual scene 22 is at least partially displayed to a user.

The virtual visual scenes 22 illustrated may be mediated reality scenes, virtual reality scenes or augmented reality scenes. A virtual reality scene displays a fully artificial virtual visual space 20. An augmented reality scene displays a partially artificial, partially real virtual visual space 20.

The mediated reality, augmented reality or virtual reality may be user interactive-mediated. In this case, user actions at least partially determine what happens within the virtual visual space 20. This may enable interaction with a virtual object 21 such as a visual element 28 within the virtual visual space 20.

The mediated reality, augmented reality or virtual reality may be perspective-mediated. In this case, user actions determine the point of view 24 within the virtual visual space 20, changing the virtual visual scene 22. For example, as illustrated in Figs 1A, 1B, 1C a position 23 of the point of view 24 within the virtual visual space 20 may be changed and/or a direction or orientation 25 of the point of view 24 within the virtual visual space 20 may be changed. If the virtual visual space 20 is three-dimensional, the position 23 of the point of view 24 has three degrees of freedom e.g. up/down, forward/back, left/right and the direction 25 of the point of view 24 within the virtual visual space 20 has three degrees of freedom e.g. roll, pitch, yaw. The point of view 24 may be continuously variable in position 23 and/or direction 25 and user action then changes the position and/or direction of the point of view 24 continuously. Alternatively, the point of view 24 may have discrete quantised positions 23 and/or discrete quantised directions 25 and user action switches by discretely jumping between the allowed positions 23 and/or directions 25 of the point of view 24.

Fig 3A illustrates a real space 10 comprising real objects 11 that partially corresponds with the virtual visual space 20 of Fig 1A. In this example, each real object 11 in the real space 10 has a corresponding virtual object 21 in the virtual visual space 20, however, each virtual object 21 in the virtual visual space 20 does not have a corresponding real object 11 in the real space 10. In this example, one of the virtual objects 21, the computer-generated visual element 28, is an artificial virtual object 21 that does not have a corresponding real object 11 in the real space 10.

A linear mapping exists between the real space 10 and the virtual visual space 20 and the same mapping exists between each real object 11 in the real space 10 and its corresponding virtual object 21. The relative relationship of the real objects 11 in the real space 10 is therefore the same as the relative relationship between the corresponding virtual objects 21 in the virtual visual space 20.

Fig 3B illustrates a real visual scene 12 that partially corresponds with the virtual visual scene 22 of Fig 1B, it includes real objects 11 but not artificial virtual objects. The real visual scene is from a perspective corresponding to the point of view 24 in the virtual visual space 20 of Fig 1A. The real visual scene 12 content is determined by that corresponding point of view 24 and the field of view 26 in virtual space 20 (point of view 14 in real space 10).

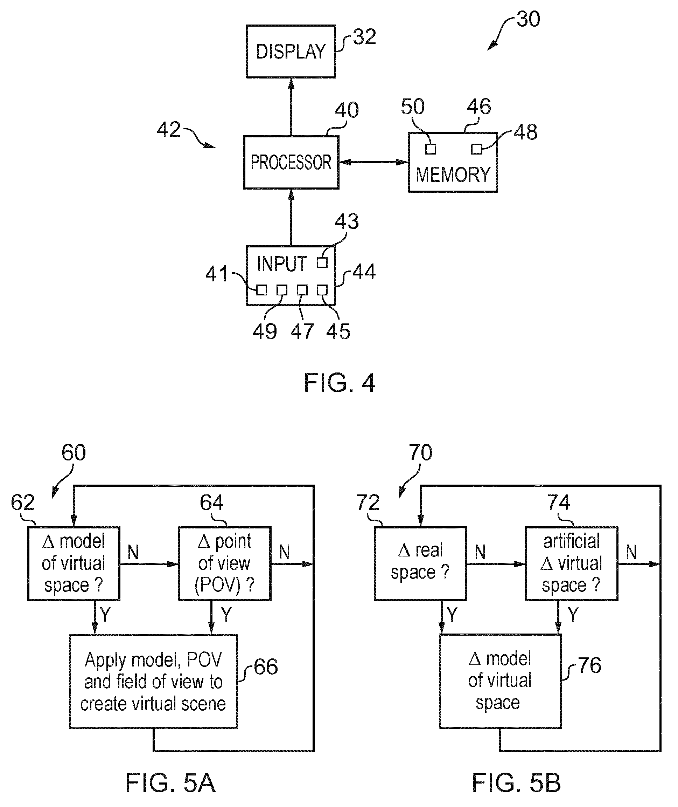

Fig 2A may be an illustration of an augmented reality version of the real visual scene 12 illustrated in Fig 3B. The virtual visual scene 22 comprises the real visual scene 12 of the real space 10 supplemented by one or more visual elements 28 displayed by an apparatus to a user. The visual elements 28 may be a computer-generated visual element. In a see-through arrangement, the virtual visual scene 22 comprises the actual real visual scene 12 which is seen through a display of the supplemental visual element(s) 28. In a see-video arrangement, the virtual visual scene 22 comprises a displayed real visual scene 12 and displayed supplemental visual element(s) 28. The displayed real visual scene 12 may be based on an image from a single point of view 24 or on multiple images from different points of view 24 at the same time, processed to generate an image from a single point of view 24. Fig 4 illustrates an example of an apparatus 30 that is operable to enable mediated reality and/or augmented reality and/or virtual reality.

The apparatus 30 comprises a display 32 for providing at least parts of the virtual visual scene 22 to a user in a form that is perceived visually by the user. The display 32 may be a visual display that provides light that displays at least parts of the virtual visual scene 22 to a user. Examples of visual displays include liquid crystal displays, organic light emitting displays, emissive, reflective, transmissive and transflective displays, direct retina projection display, near eye displays etc.

The display 32 is controlled in this example but not necessarily all examples by a controller 42.

Implementation of a controller 42 may be as controller circuitry. The controller 42 may be implemented in hardware alone, have certain aspects in software including firmware alone or can be a combination of hardware and software (including firmware).

As illustrated in Fig 4 the controller 42 may be implemented using instructions that enable hardware functionality, for example, by using executable computer program instructions 48 in a general-purpose or special-purpose processor 40 that may be stored on a computer readable storage medium (disk, memory etc) to be executed by such a processor 40.

The processor 40 is configured to read from and write to the memory 46. The processor 40 may also comprise an output interface via which data and/or commands are output by the processor 40 and an input interface via which data and/or commands are input to the processor 40.

The memory 46 stores a computer program 48 comprising computer program instructions (computer program code) that controls the operation of the apparatus 30 when loaded into the processor 40. The computer program instructions, of the computer program 48, provide the logic and routines that enables the apparatus to perform the methods illustrated in Figs 5A & 5B. The processor 40 by reading the memory 46 is able to load and execute the computer program 48.

The blocks illustrated in the Figs 5A & 5B may represent steps in a method and/or sections of code in the computer program 48. The illustration of a particular order to the blocks does not necessarily imply that there is a required or preferred order for the blocks and the order and arrangement of the block may be varied. Furthermore, it77 may be possible for some blocks to be omitted.

The apparatus 30 may enable mediated reality and/or augmented reality and/or virtual reality, for example using the method 60 illustrated in Fig 5A or a similar method. The controller 42 stores and maintains a model 50 of the virtual visual space 20. The model may be provided to the controller 42 or determined by the controller 42. For example, sensors in input circuitry 44 may be used to create overlapping depth maps of the virtual visual space from different points of view and a three dimensional model may then be produced.

There are many different technologies that may be used to create a depth map. An example of a passive system, used in the Kinect™ device, is when an object is painted with a non-homogenous pattern of symbols using infrared light and the reflected light is measured using multiple cameras and then processed, using the parallax effect, to determine a position of the object.

At block 62 it is determined whether or not the model of the virtual visual space 20 has changed. If the model of the virtual visual space 20 has changed the method moves to block 66. If the model of the virtual visual space 20 has not changed the method moves to block 64.

At block 64 it is determined whether or not the point of view 24 in the virtual visual space 20 has changed. If the point of view 24 has changed the method moves to block 66. If the point of view 24 has not changed the method returns to block 62.

At block 66, a two-dimensional projection of the three-dimensional virtual visual space 20 is taken from the location 23 and in the direction 25 defined by the current point of view 24. The projection is then limited by the field of view 26 to produce the virtual visual scene 22.The method then returns to block 62.

Where the apparatus 30 enables augmented reality, the virtual visual space 20 comprises objects 11 from the real space 10 and also visual elements 28 not present in the real space 10. The combination of such visual elements 28 may be referred to as the artificial virtual visual space. Fig 5B illustrates a method 70 for updating a model of the virtual visual space 20 for augmented reality.

At block 72 it is determined whether or not the real space 10 has changed. If the real space 10 has changed the method moves to block 76. If the real space 10 has not changed the method moves to block 74. Detecting a change in the real space 10 may be achieved at a pixel level using differencing and may be achieved at an object level using computer vision to track objects as they move.

At block 74 it is determined whether or not the artificial virtual visual space has changed. If the artificial virtual visual space has changed the method moves to block 76. If the artificial virtual visual space has not changed the method returns to block 72. As the artificial virtual visual space is generated by the controller 42 changes to the visual elements 28 are easily detected.

At block 76, the model of the virtual visual space 20 is updated.

The apparatus 30 may enable user-interactive mediation for mediated reality and/or augmented reality and/or virtual reality. The user input circuitry 44 detects user actions using user input 43. These user actions are used by the controller 42 to determine what happens within the virtual visual space 20. This may enable interaction with a visual element 28 within the virtual visual space 20.

The apparatus 30 may enable perspective mediation for mediated reality and/or augmented reality and/or virtual reality. The user input circuitry 44 detects user actions. These user actions are used by the controller 42 to determine the point of view 24 within the virtual visual space 20, changing the virtual visual scene 22. The point of view 24 may be continuously variable in position and/or direction and user action changes the position and/or direction of the point of view 24. Alternatively, the point of view 24 may have discrete quantised positions and/or discrete quantised directions and user action switches by jumping to the next position and/or direction of the point of view 24.

The apparatus 30 may enable first person perspective for mediated reality, augmented reality or virtual reality. The user input circuitry 44 detects the user's real point of view 14 using user point of view sensor 45. The user's real point of view is used by the controller 42 to determine the point of view 24 within the virtual visual space 20, changing the virtual visual scene 22. Referring back to Fig 3A, a user 18 has a real point of view 14. The real point of view may be changed by the user 18. For example, a real location 13 of the real point of view 14 is the location of the user 18 and can be changed by changing the physical location 13 of the user 18. For example, a real direction 15 of the real point of view 14 is the direction in which the user 18 is looking and can be changed by changing the real direction of the user 18. The real direction 15 may, for example, be changed by a user 18 changing an orientation of their head or view point and/or a user changing a direction of their gaze. A head-mounted apparatus 30 may be used to enable first-person perspective mediation by measuring a change in orientation of the user's head and/or a change in the user's direction of gaze.

In some but not necessarily all examples, the apparatus 30 comprises as part of the input circuitry 44 point of view sensors 45 for determining changes in the real point of view.

For example, positioning technology such as GPS, triangulation (trilateration) by transmitting to multiple receivers and/or receiving from multiple transmitters, acceleration detection and integration may be used to determine a new physical location 13 of the user 18 and real point of view 14.

For example, accelerometers, electronic gyroscopes or electronic compasses may be used to determine a change in an orientation of a user's head or view point and a consequential change in the real direction 15 of the real point of view 14.

For example, pupil tracking technology, based for example on computer vision, may be used to track movement of a user's eye or eyes and therefore determine a direction of a user's gaze and consequential changes in the real direction 15 of the real point of view 14.

The apparatus 30 may comprise as part of the input circuitry 44 image sensors 47 for imaging the real space 10.

An example of an image sensor 47 is a digital image sensor that is configured to operate as a camera. Such a camera may be operated to record static images and/or video images In some, but not necessarily all embodiments, cameras may be configured in a stereoscopic or other spatially distributed arrangement so that the real space 10 is viewed from different perspectives. This may enable the creation of a three-dimensional image and/or processing to establish depth, for example, via the parallax effect.

In some, but not necessarily all embodiments, the input circuitry 44 comprises depth sensors 49. A depth sensor 49 may comprise a transmitter and a receiver. The transmitter transmits a signal (for example, a signal a human cannot sense such as ultrasound or infrared light) and the receiver receives the reflected signal. Using a single transmitter and a single receiver some depth information may be achieved via measuring the time of flight from transmission to reception. Better resolution may be achieved by using more transmitters and/or more receivers (spatial diversity). In one example, the transmitter is configured to 'paint' the real space 10 with light, preferably invisible light such as infrared light, with a spatially dependent pattern. Detection of a certain pattern by the receiver allows the real space 10 to be spatially resolved. The distance to the spatially resolved portion of the real space 10 may be determined by time of flight and/or stereoscopy (if the receiver is in a stereoscopic position relative to the transmitter).

In some but not necessarily all embodiments, the input circuitry 44 may comprise communication circuitry 41 in addition to or as an alternative to one or more of the image sensors 47 and the depth sensors 49. Such communication circuitry 41 may communicate with one or more remote image sensors 47 in the real space 10 and/or with remote depth sensors 49 in the real space 10.

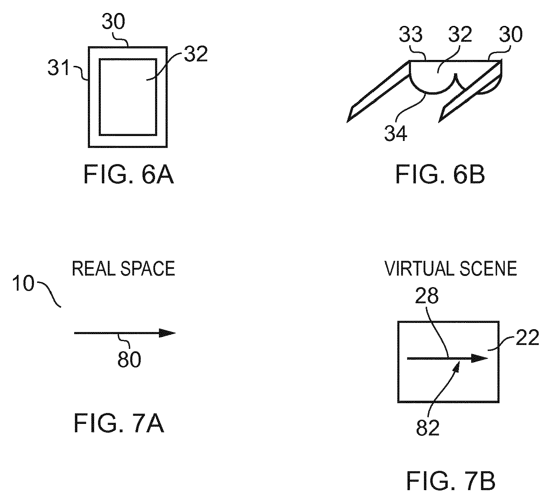

Figs 6A and 6B illustrate examples of apparatus 30 that enable display of at least parts of the virtual visual scene 22 to a user.

Fig 6A illustrates a handheld apparatus 31 comprising a display screen as display 32 that displays images to a user and is used for displaying the virtual visual scene 22 to the user. The apparatus 30 may be moved deliberately in the hands of a user in one or more of the previously mentioned six degrees of freedom. The handheld apparatus 31 may house the sensors 45 for determining changes in the real point of view from a change in orientation of the apparatus 30.

The handheld apparatus 31 may be or may be operated as a see-video arrangement for augmented reality that enables a live or recorded video of a real visual scene 12 to be displayed on the display 32 for viewing by the user while one or more visual elements 28 are simultaneously displayed on the display 32 for viewing by the user. The combination of the displayed real visual scene 12 and displayed one or more visual elements 28 provides the virtual visual scene 22 to the user.

If the handheld apparatus 31 has a camera mounted on a face opposite the display 32, it may be operated as a see-video arrangement that enables a live real visual scene 12 to be viewed while one or more visual elements 28 are displayed to the user to provide in combination the virtual visual scene 22.

Fig 6B illustrates a head-mounted apparatus 33 comprising a display 32 that displays images to a user. The head-mounted apparatus 33 may be moved automatically when a head of the user moves. The head-mounted apparatus 33 may house the sensors 45 for gaze direction detection and/or selection gesture detection.

The head-mounted apparatus 33 may be a see-through arrangement for augmented reality that enables a live real visual scene 12 to be viewed while one or more visual elements 28 are displayed by the display 32 to the user to provide in combination the virtual visual scene 22. In this case a visor 34, if present, is transparent or semi-transparent so that the live real visual scene 12 can be viewed through the visor 34.

The head-mounted apparatus 33 may be operated as a see-video arrangement for augmented reality that enables a live or recorded video of a real visual scene 12 to be displayed by the display 32 for viewing by the user while one or more visual elements 28 are simultaneously displayed by the display 32 for viewing by the user. The combination of the displayed real visual scene 12 and displayed one or more visual elements 28 provides the virtual visual scene 22 to the user. In this case a visor 34 is opaque and may be used as display 32.

Other examples of apparatus 30 that enable display of at least parts of the virtual visual scene 22 to a user may be used.

For example, one or more projectors may be used that project one or more visual elements to provide augmented reality by supplementing a real visual scene of a physical real world environment (real space).

For example, multiple projectors or displays may surround a user to provide virtual reality by presenting a fully artificial environment (a virtual visual space) as a virtual visual scene to the user.

Referring back to Fig 4, an apparatus 30 may enable user-interactive mediation for mediated reality and/or augmented reality and/or virtual reality. The user input circuitry 44 detects user actions using user input 43. These user actions are used by the controller 42 to determine what happens within the virtual visual space 20. This may enable interaction with a visual element 28 within the virtual visual space 20.

The detected user actions may, for example, be gestures performed in the real space 10. Gestures may be detected in a number of ways. For example, depth sensors 49 may be used to detect movement of parts a user 18 and/or or image sensors 47 may be used to detect movement of parts of a user 18 and/or positional/movement sensors attached to a limb of a user 18 may be used to detect movement of the limb.

Object tracking may be used to determine when an object or user changes. For example, tracking the object on a large macro-scale allows one to create a frame of reference that moves with the object. That frame of reference can then be used to track time-evolving changes of shape of the object, by using temporal differencing with respect to the object. This can be used to detect small scale human motion such as gestures, hand movement, finger movement, facial movement. These are scene independent user (only) movements relative to the user.

The apparatus 30 may track a plurality of objects and/or points in relation to a user's body, for example one or more joints of the user's body. In some examples, the apparatus 30 may perform full body skeletal tracking of a user's body. In some examples, the apparatus 30 may perform digit tracking of a user's hand.

The tracking of one or more objects and/or points in relation to a user's body may be used by the apparatus 30 in gesture recognition.

Referring to Fig 7A, a particular gesture 80 in the real space 10 is a gesture user input used as a 'user control' event by the controller 42 to determine what happens within the virtual visual space 20. A gesture user input is a gesture 80 that has meaning to the apparatus 30 as a user input.

Referring to Fig 7B, illustrates that in some but not necessarily all examples, a corresponding representation of the gesture 80 in real space is rendered in the virtual visual scene 22 by the apparatus 30. The representation involves one or more visual elements 28 moving 82 to replicate or indicate the gesture 80 in the virtual visual scene 22.

A gesture 80 may be static or moving. A moving gesture may comprise a movement or a movement pattern comprising a series of movements. For example it could be making a circling motion or a side to side or up and down motion or the tracing of a sign in space. A moving gesture may, for example, be an apparatus-independent gesture or an apparatus-dependent gesture. A moving gesture may involve movement of a user input object e.g. a user body part or parts, or a further apparatus, relative to the sensors. The body part may comprise the user's hand or part of the user's hand such as one or more fingers and thumbs. In other examples, the user input object may comprise a different part of the body of the user such as their head or arm. Three-dimensional movement may comprise motion of the user input object in any of six degrees of freedom. The motion may comprise the user input object moving towards or away from the sensors as well as moving in a plane parallel to the sensors or any combination of such motion.

A gesture 80 may be a non-contact gesture. A non-contact gesture does not contact the sensors at any time during the gesture.

A gesture 80 may be an absolute gesture that is defined in terms of an absolute displacement from the sensors. Such a gesture may be tethered, in that it is performed at a precise location in the real space 10. Alternatively a gesture 80 may be a relative gesture that is defined in terms of relative displacement during the gesture. Such a gesture may be un-tethered, in that it need not be performed at a precise location in the real space 10 and may be performed at a large number of arbitrary locations.

A gesture 80 may be defined as evolution of displacement, of a tracked point relative to an origin, with time. It may, for example, be defined in terms of motion using time variable parameters such as displacement, velocity or using other kinematic parameters. An un-tethered gesture may be defined as evolution of relative displacement Δd with relative time Δt.

A gesture 80 may be performed in one spatial dimension (1 D gesture), two spatial dimensions (2D gesture) or three spatial dimensions (3D gesture).

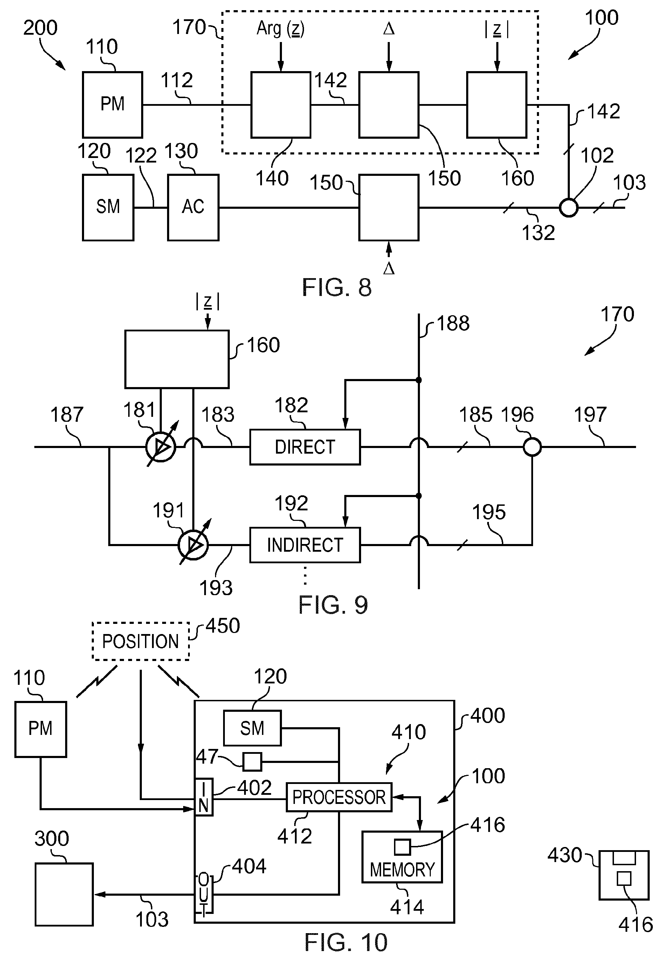

Fig. 8 illustrates an example of a system 100 and also an example of a method 200. The system 100 and method 200 record a sound space and process the recorded sound space to enable a rendering of the recorded sound space as a rendered sound scene for a listener at a particular position (the origin) and orientation within the sound space.

A sound space is an arrangement of sound sources in a three-dimensional space. A sound space may be defined in relation to recording sounds (a recorded sound space) and in relation to rendering sounds (a rendered sound space).

The system 100 comprises one or more portable microphones 110 and may comprise one or more static microphones 120.

In this example, but not necessarily all examples, the origin of the sound space is at a microphone. In this example, the microphone at the origin is a static microphone 120. It may record one or more channels, for example it may be a microphone array. However, the origin may be at any arbitrary position.

In this example, only a single static microphone 120 is illustrated. However, in other examples multiple static microphones 120 may be used independently.

The system 100 comprises one or more portable microphones 110. The portable microphone 110 may, for example, move with a sound source within the recorded sound space. The portable microphone may, for example, be an 'up-close' microphone that remains close to a sound source. This may be achieved, for example, using a boom microphone or, for example, by attaching the microphone to the sound source, for example, by using a Lavalier microphone. The portable microphone 110 may record one or more recording channels.

The relative position of the portable microphone PM 110 from the origin may be represented by the vector z. The vector z therefore positions the portable microphone 110 relative to a notional listener of the recorded sound space.

The relative orientation of the notional listener at the origin may be represented by the value Δ. The orientation value Δ defines the notional listener's 'point of view' which defines the sound scene. The sound scene is a representation of the sound space listened to from a particular point of view within the sound space.

When the sound space as recorded is rendered to a user (listener) via the system 100 in Fig. 1, it is rendered to the listener as if the listener is positioned at the origin of the recorded sound space with a particular orientation. It is therefore important that, as the portable microphone 110 moves in the recorded sound space, its position z relative to the origin of the recorded sound space is tracked and is correctly represented in the rendered sound space. The system 100 is configured to achieve this.

The audio signals 122 output from the static microphone 120 are coded by audio coder 130 into a multichannel audio signal 132. If multiple static microphones were present, the output of each would be separately coded by an audio coder into a multichannel audio signal.

The audio coder 130 may be a spatial audio coder such that the multichannel audio signals 132 represent the sound space as recorded by the static microphone 120 and can be rendered giving a spatial audio effect. For example, the audio coder 130 may be configured to produce multichannel audio signals 132 according to a defined standard such as, for example, binaural coding, 5.1 surround sound coding, 7.1 surround sound coding etc. If multiple static microphones were present, the multichannel signal of each static microphone would be produced according to the same defined standard such as, for example, binaural coding, 5.1 surround sound coding, and 7.1 surround sound coding and in relation to the same common rendered sound space.

The multichannel audio signals 132 from one or more the static microphones 120 are mixed by mixer 102 with multichannel audio signals 142 from the one or more portable microphones 110 to produce a multi-microphone multichannel audio signal 103 that represents the recorded sound scene relative to the origin and which can be rendered by an audio decoder corresponding to the audio coder 130 to reproduce a rendered sound scene to a listener that corresponds to the recorded sound scene when the listener is at the origin.

The multichannel audio signal 142 from the, or each, portable microphone 110 is processed before mixing to take account of any movement of the portable microphone 110 relative to the origin at the static microphone 120.

The audio signals 112 output from the portable microphone 110 are processed by the positioning block 140 to adjust for movement of the portable microphone 110 relative to the origin. The positioning block 140 takes as an input the vector z or some parameter or parameters dependent upon the vector z. The vector z represents the relative position of the portable microphone 110 relative to the origin.

The positioning block 140 may be configured to adjust for any time misalignment between the audio signals 112 recorded by the portable microphone 110 and the audio signals 122 recorded by the static microphone 120 so that they share a common time reference frame. This may be achieved, for example, by correlating naturally occurring or artificially introduced (non-audible) audio signals that are present within the audio signals 112 from the portable microphone 110 with those within the audio signals 122 from the static microphone 120. Any timing offset identified by the correlation may be used to delay/advance the audio signals 112 from the portable microphone 110 before processing by the positioning block 140.

The positioning block 140 processes the audio signals 112 from the portable microphone 110, taking into account the relative orientation (Arg(z)) of that portable microphone 110 relative to the origin at the static microphone 120.

The audio coding of the static microphone audio signals 122 to produce the multichannel audio signal 132 assumes a particular orientation of the rendered sound space relative to an orientation of the recorded sound space and the audio signals 122 are encoded to the multichannel audio signals 132 accordingly.

The relative orientation Arg (z) of the portable microphone 110 in the recorded sound space is determined and the audio signals 112 representing the sound object are coded to the multichannels defined by the audio coding 130 such that the sound object is correctly oriented within the rendered sound space at a relative orientation Arg (z) from the listener. For example, the audio signals 112 may first be mixed or encoded into the multichannel signals 142 and then a transformation T may be used to rotate the multichannel audio signals 142, representing the moving sound object, within the space defined by those multiple channels by Arg (z).

An orientation block 150 may be used to rotate the multichannel audio signals 142 by Δ, if necessary. Similarly, an orientation block 150 may be used to rotate the multichannel audio signals 132 by Δ, if necessary.

The functionality of the orientation block 150 is very similar to the functionality of the orientation function of the positioning block 140 except it rotates by Δ instead of Arg(z).

In some situations, for example when the sound scene is rendered to a listener through a head-mounted audio output device 300, for example headphones using binaural audio coding, it may be desirable for the rendered sound space 310 to remain fixed in space 320 when the listener turns their head 330 in space. This means that the rendered sound space 310 needs to be rotated relative to the audio output device 300 by the same amount in the opposite sense to the head rotation. The orientation of the rendered sound space 310 tracks with the rotation of the listener's head so that the orientation of the rendered sound space 310 remains fixed in space 320 and does not move with the listener's head 330.

The portable microphone signals 112 are additionally processed to control the perception of the distance D of the sound object from the listener in the rendered sound scene, for example, to match the distance |z| of the sound object from the origin in the recorded sound space. This can be useful when binaural coding is used so that the sound object is, for example, externalized from the user and appears to be at a distance rather than within the user's head, between the user's ears. The distance block 160 processes the multichannel audio signal 142 to modify the perception of distance.

Fig. 9 illustrates a module 170 which may be used, for example, to perform the method 200 and/or functions of the positioning block 140, orientation block 150 and distance block 160 in Fig. 8. The module 170 may be implemented using circuitry and/or programmed processors.

The Figure illustrates the processing of a single channel of the multichannel audio signal 142 before it is mixed with the multichannel audio signal 132 to form the multi-microphone multichannel audio signal 103. A single input channel of the multichannel signal 142 is input as signal 187.

The input signal 187 passes in parallel through a "direct" path and one or more "indirect" paths before the outputs from the paths are mixed together, as multichannel signals, by mixer 196 to produce the output multichannel signal 197. The output multichannel signal 197, for each of the input channels, are mixed to form the multichannel audio signal 142 that is mixed with the multichannel audio signal 132.

The direct path represents audio signals that appear, to a listener, to have been received directly from an audio source and an indirect path represents audio signals that appear to a listener to have been received from an audio source via an indirect path such as a multipath or a reflected path or a refracted path.

The distance block 160 by modifying the relative gain between the direct path and the indirect paths, changes the perception of the distance D of the sound object from the listener in the rendered sound space 310.

Each of the parallel paths comprises a variable gain device 181, 191 which is controlled by the distance block 160.

The perception of distance can be controlled by controlling relative gain between the direct path and the indirect (decorrelated) paths. Increasing the indirect path gain relative to the direct path gain increases the perception of distance.

In the direct path, the input signal 187 is amplified by variable gain device 181, under the control of the distance block 160, to produce a gain-adjusted signal 183. The gain-adjusted signal 183 is processed by a direct processing module 182 to produce a direct multichannel audio signal 185.

In the indirect path, the input signal 187 is amplified by variable gain device 191, under the control of the distance block 160, to produce a gain-adjusted signal 193. The gain-adjusted signal 193 is processed by an indirect processing module 192 to produce an indirect multichannel audio signal 195.

The direct multichannel audio signal 185 and the one or more indirect multichannel audio signals 195 are mixed in the mixer 196 to produce the output multichannel audio signal 197.

The direct processing block 182 and the indirect processing block 192 both receive direction of arrival signals 188. The direction of arrival signal 188 gives the orientation Arg(z) of the portable microphone 110 (moving sound object) in the recorded sound space and the orientation Δ of the rendered sound space 310 relative to the notional listener /audio output device 300.

The position of the moving sound object changes as the portable microphone 110 moves in the recorded sound space and the orientation of the rendered sound space changes as a head-mounted audio output device, rendering the sound space rotates.

The direct processing block 182 may, for example, include a system 184 that rotates the single channel audio signal, gain-adjusted input signal 183, in the appropriate multichannel space producing the direct multichannel audio signal 185. The system uses a transfer function to performs a transformation T that rotates multichannel signals within the space defined for those multiple channels by Arg(z) and by Δ, defined by the direction of arrival signal 188. For example, a head related transfer function (HRTF) interpolator may be used for binaural audio. As another example, Vector Base Amplitude Panning (VBAP) may be used for loudspeaker format (e.g. 5.1) audio.

The indirect processing block 192 may, for example, use the direction of arrival signal 188 to control the gain of the single channel audio signal, the gain-adjusted input signal 193, using a variable gain device 194. The amplified signal is then processed using a static decorrelator 196 and a static transformation T to produce the indirect multichannel audio signal 195. The static decorrelator in this example uses a pre-delay of at least 2 ms. The transformation T rotates multichannel signals within the space defined for those multiple channels in a manner similar to the direct system but by a fixed amount. For example, a static head related transfer function (HRTF) interpolator may be used for binaural audio.

It will therefore be appreciated that the module 170 can be used to process the portable microphone signals 112 and perform the functions of:
(i) changing the relative position (orientation Arg(z) and/or distance |z|) of a sound object, from a listener in the rendered sound space and
(ii) changing the orientation of the rendered sound space (including the sound object positioned according to (i)).

It should also be appreciated that the module 170 may also be used for performing the function of the orientation block 150 only, when processing the audio signals 122 provided by the static microphone 120. However, the direction of arrival signal will include only Δ and will not include Arg(z). In some but not necessarily all examples, gain of the variable gain devices 191 modifying the gain to the indirect paths may be put to zero and the gain of the variable gain device 181 for the direct path may be fixed. In this instance, the module 170 reduces to a system that rotates the recorded sound space to produce the rendered sound space according to a direction of arrival signal that includes only Δ and does not include Arg(z).

Fig. 10 illustrates an example of the system 100 implemented using an apparatus 400. The apparatus 400 may, for example, be a static electronic device, a portable electronic device or a hand-portable electronic device that has a size that makes it suitable to carried on a palm of a user or in an inside jacket pocket of the user.

In this example, the apparatus 400 comprises the static microphone 120 as an integrated microphone but does not comprise the one or more portable microphones 110 which are remote. In this example, but not necessarily all examples, the static microphone 120 is a microphone array. However, in other examples, the apparatus 400 does not comprise the static microphone 120.

The apparatus 400 comprises an external communication interface 402 for communicating externally with external microphones, for example, the remote portable microphone(s) 110. This may, for example, comprise a radio transceiver.

A positioning system 450 is illustrated as part of the system 100. This positioning system 450 is used to position the portable microphone(s) 110 relative to the origin of the sound space e.g. the static microphone 120. In this example, the positioning system 450 is illustrated as external to both the portable microphone 110 and the apparatus 400. It provides information dependent on the position z of the portable microphone 110 relative to the origin of the sound space to the apparatus 400. In this example, the information is provided via the external communication interface 402, however, in other examples a different interface may be used. Also, in other examples, the positioning system may be wholly or partially located within the portable microphone 110 and/or within the apparatus 400.

The position system 450 provides an update of the position of the portable microphone 110 with a particular frequency and the term 'accurate' and 'inaccurate' positioning of the sound object should be understood to mean accurate or inaccurate within the constraints imposed by the frequency of the positional update. That is accurate and inaccurate are relative terms rather than absolute terms.

The position system 450 enables a position of the portable microphone 110 to be determined. The position system 450 may receive positioning signals and determine a position which is provided to the processor 412 or it may provide positioning signals or data dependent upon positioning signals so that the processor 412 may determine the position of the portable microphone 110.

There are many different technologies that may be used by a position system 450 to position an object including passive systems where the positioned object is passive and does not produce a positioning signal and active systems where the positioned object produces one or more positioning signals. An example of system, used in the Kinect™ device, is when an object is painted with a non-homogenous pattern of symbols using infrared light and the reflected light is measured using multiple cameras and then processed, using the parallax effect, to determine a position of the object. An example of an active radio positioning system is when an object has a transmitter that transmits a radio positioning signal to multiple receivers to enable the object to be positioned by, for example, trilateration or triangulation. The transmitter may be a Bluetooth tag or a radio-frequency identification (RFID) tag, as an example. An example of a passive radio positioning system is when an object has a receiver or receivers that receive a radio positioning signal from multiple transmitters to enable the object to be positioned by, for example, trilateration or triangulation. Trilateration requires an estimation of a distance of the object from multiple, non-aligned, transmitter/receiver locations at known positions. A distance may, for example, be estimated using time of flight or signal attenuation. Triangulation requires an estimation of a bearing of the object from multiple, non-aligned, transmitter/receiver locations at known positions. A bearing may, for example, be estimated using a transmitter that transmits with a variable narrow aperture, a receiver that receives with a variable narrow aperture, or by detecting phase differences at a diversity receiver.

Other positioning systems may use dead reckoning and inertial movement or magnetic positioning.

The object that is positioned may be the portable microphone 110 or it may an object worn or carried by a person associated with the portable microphone 110 or it may be the person associated with the portable microphone 110.

The apparatus 400 wholly or partially operates the system 100 and method 200 described above to produce a multi-microphone multichannel audio signal 103.

The apparatus 400 provides the multi-microphone multichannel audio signal 103 via an output communications interface 404 to an audio output device 300 for rendering.

In some but not necessarily all examples, the audio output device 300 may use binaural coding. Alternatively or additionally, in some but not necessarily all examples, the audio output device 300 may be a head-mounted audio output device.

In this example, the apparatus 400 comprises a controller 410 configured to process the signals provided by the static microphone 120 and the portable microphone 110 and the positioning system 450. In some examples, the controller 410 may be required to perform analogue to digital conversion of signals received from microphones 110, 120 and/or perform digital to analogue conversion of signals to the audio output device 300 depending upon the functionality at the microphones 110, 120 and audio output device 300. However, for clarity of presentation no converters are illustrated in Fig. 9.

Implementation of a controller 410 may be as controller circuitry. The controller 410 may be implemented in hardware alone, have certain aspects in software including firmware alone or can be a combination of hardware and software (including firmware).

As illustrated in Fig. 10 the controller 410 may be implemented using instructions that enable hardware functionality, for example, by using executable instructions of a computer program 416 in a general-purpose or special-purpose processor 412 that may be stored on a computer readable storage medium (disk, memory etc) to be executed by such a processor 412.

The processor 412 is configured to read from and write to the memory 414. The processor 412 may also comprise an output interface via which data and/or commands are output by the processor 412 and an input interface via which data and/or commands are input to the processor 412.

The memory 414 stores a computer program 416 comprising computer program instructions (computer program code) that controls the operation of the apparatus 400 when loaded into the processor 412. The computer program instructions, of the computer program 416, provide the logic and routines that enables the apparatus to perform the methods illustrated in Figs. 1-19. The processor 412 by reading the memory 414 is able to load and execute the computer program 416.

The blocks illustrated in the Figs 8 and 9 may represent steps in a method and/or sections of code in the computer program 416. The illustration of a particular order to the blocks does not necessarily imply that there is a required or preferred order for the blocks and the order and arrangement of the block may be varied. Furthermore, it may be possible for some blocks to be omitted.

The preceding description describes, in relation to Figs 1 to 7, a system, apparatus 30, method 60 and computer program 48 that enables control of a virtual visual space 20 and the virtual visual scene 26 dependent upon the virtual visual space 20.

The preceding description describes. In relation to Figs 8 to 10, a system 100, apparatus 400, method 200 and computer program 416 that enables control of a sound space and the sound scene dependent upon the sound space.

In some but not necessarily all examples, the virtual visual space 20 and the sound space may be corresponding. "Correspondence" or "corresponding" when used in relation to a sound space and a virtual visual space means that the sound space and virtual visual space are time and space aligned, that is they are the same space at the same time.

The correspondence between virtual visual space and sound space results in correspondence between the virtual visual scene and the sound scene. "Correspondence" or "corresponding" when used in relation to a sound scene and a virtual visual scene means that the sound space and virtual visual space are corresponding and a notional listener whose point of view defines the sound scene and a notional viewer whose point of view defines the virtual visual scene are at the same position and orientation, that is they have the same point of view.

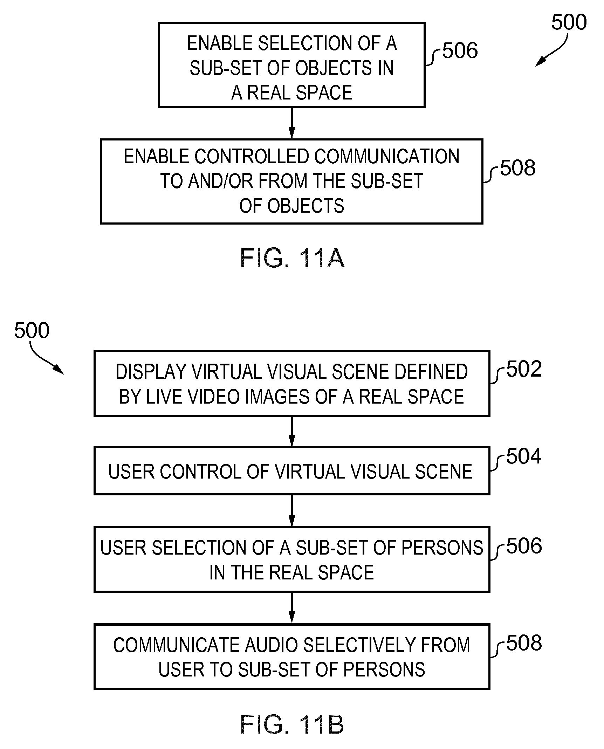

The following description describes in relation to Figs 11 to 19 a method 500 that enables control of sound objects based on past actions of a user. The method 500 may be performed by a system as previously described, an apparatus as previously described and/or a computer program as previously described.

Fig 11A illustrates an example of a method 500 comprising: at block 506 enabling selection of a sub-set of objects in a real space for controlled communication in response to actions of a particular person; and at block 508 enabling controlled communication to and/or from the sub-set of objects.

In one example, the method 500 of Fig 11A may use mediated reality to enable a user 18 through actions in a virtual space 10 to select the sub-set of objects for controlled audio communication. The method then additionally comprises:
(i) providing user-interactive, mediated reality by providing live display of a virtual visual scene of a virtual visual space to a user via a display, wherein the virtual visual space, comprising virtual objects, is at least partially defined by live video images of a real space comprising objects and captured by multiple video cameras simultaneously from different perspectives;
(ii) enabling the user to control a perspective determining the displayed virtual visual scene. The block 506 is then enabling the user to select a sub-set of the objects in the real space for communication by performing a selection action in the virtual space; and the block 598 is then enabling selective communication between the user and the sub-set of objects but not other objects in the real space.

In one example, the method 500 of Fig 11A may use mediated reality to enable a user 18 through actions in a virtual space 10 to select persons 11 for selective audio communication in a real space 10, corresponding to the virtual space 20.

As an example, the objects are persons captured by multiple video cameras simultaneously from different perspectives. The block 506 is then enabling the user to select a sub-set of the persons in the real space for communication by performing the selection action in the virtual space; and the block 508 is then capturing of audio output from the user and directed communication of the captured audio to the sub-set of the persons but not other persons in the real space. As another example, the objects are microphones in the real space 10. The block 506 is then enabling the user to select a sub-set of the microphones in the real space for communication by performing the selection action in the virtual space; and the block 508 is then capturing of audio output from the sub-set of the microphones but not other microphones in the real space and communication of the captured audio to the user.

Fig 11B illustrates an example of a method 500 of using mediated reality to enable a user 18 through actions in a virtual space 10 select persons 11 for selective audio communication in a real space 10, corresponding to the virtual space 20.

This method can be understood more clearly in relation to the Figs 11B, 12A, 12B, 13A, 13B.

In Fig 11B, the method 500, at block 502, provides user-interactive, mediated reality by providing live display of a virtual visual scene 22 of a virtual visual space 20 to a user 18 via a display 32, wherein the virtual visual space 20, comprising virtual object 21, is at least partially defined by live video images 514 of a real space 10, comprising persons 11, captured by multiple video cameras 510 simultaneously from different perspectives 512.

The method 500 comprises, at block 504, enabling the user 18 to control a perspective 512 determining the displayed virtual visual scene 22.

The method 500, at block 506, comprises enabling the user 18 to select a sub-set 520 of the persons 11 in the real space 10 for communication by performing a selection action 530 in the virtual space 20.

The method 500, at block 508, comprises enabling capturing of audio output 540 from the user 18 and directed communication of the captured audio 544 to the sub-set 520 of the persons 11 but not other persons 11 in the real space 10.

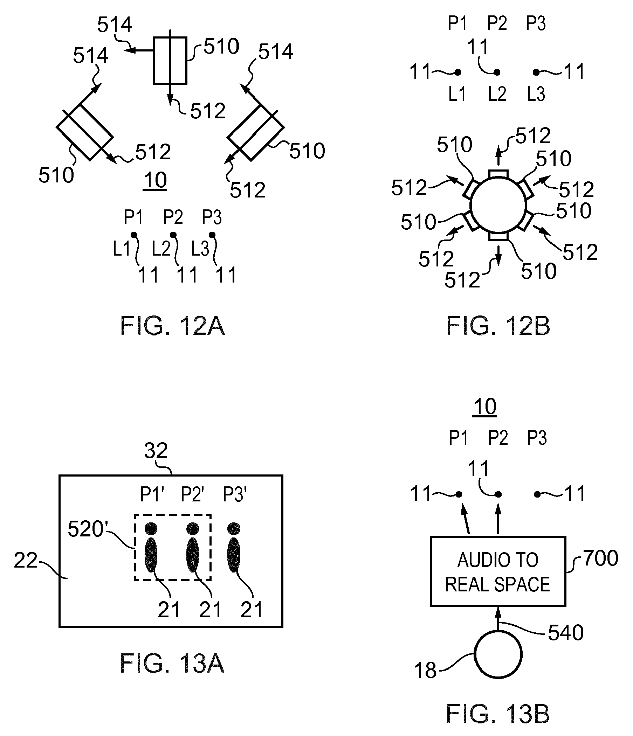

Figs 12A and 12B illustrate examples of a real space 10, comprising real objects 11 (persons P1, P2, P3) at locations L1, L2, L3. Although in these examples three persons are illustrated it will of course be appreciated that any number of persons may be present in the real space 10 at any locations.

Multiple video cameras 510 are configured to simultaneously capture live video images 514 from different perspectives 512.

In the example of Fig. 12A, the multiple video cameras 510 are convergent being directed inwards to capture the real space 10. In Fig. 12B, the multiple video cameras 510 are divergent being directed outwards to capture the real space 10. Fig. 12B illustrates the multiple video cameras 510 provided in a single device, but this need not be the case in every embodiment.

Fig. 13A illustrates an example of a virtual visual scene 22 that is defined by the captured live video images 514 described in relation to Figs 12A, 12B.

A virtual visual space 20, comprising virtual objects 21, is at least partially defined by the live video images 514 of the real space 10, comprising persons 11, provided by the multiple video cameras 510. Each real object 11 (e.g. persons P1, P2, P3) is represented by a virtual object 21 (virtual persons P1', P2', P3').

User-interactive mediated reality is provided via a display 32, as previously described. In this example, the display 32 displays live (in real-time) a virtual visual scene 22 of the virtual visual space 20 to a user 18.

The mediated reality is perspective mediated reality, and in this example first person perspective mediated reality. The method 500 enables the user 18 to control a perspective 512 that determines the displayed virtual visual scene 22. The user 18, by changing the direction of their gaze, for example by turning their head or moving their eyes, will change their point of view within the virtual space 20, as previously described, and thereby change the virtual visual scene 22.

The method 500 enables the user 18 to select a sub-set 520 (P1, P2) of the persons 11 (P1, P2, P3) in the real space 10 for communication by performing a selection action 530 (not shown in Fig. 13A) in the virtual space 20. The selection action 530 a may select a single person, multiple persons and all persons. If multiple persons are selected they may be selected arbitrarily, they may be any combination of persons and they do not need to be adjacent.

In the example of Fig. 13A, the sub-set 520 (P1, P2) of the persons 11 in the real space 10 has a corresponding sub-set 520' (P1', P2') of the virtual person/objects 21 in the virtual space 20.

Fig. 13B illustrates an example of the consequences of the user 18 performing the selection action 530 in the virtual space 20. In this example, an audio to real space module 700 captures audio output 540 from the user 18 and provides directed communication of the captured audio 544 to the sub-set 520 (P1, P2) of the persons 11 but not other persons 11 (P3) in the real space 10.

It will be appreciated from Fig. 13B, that the user 18 is not a person 11 in the real space 10 but may be remote from the real space 10. For example, the user 18 may be a director and the persons 11 may be actors being directed by the director.

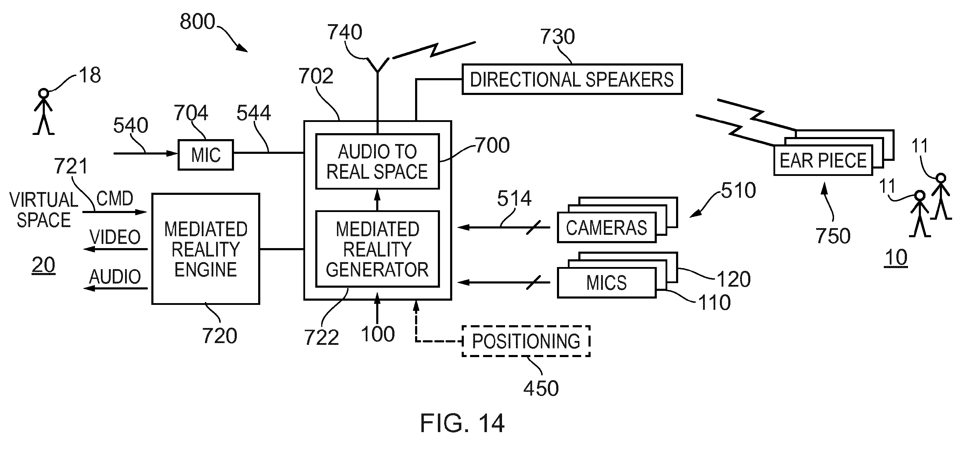

Fig. 14 illustrates a system 800 suitable for performing the method 500. The system 800 operates as an interface between the real space 10 where the persons 11 are located and the virtual space 20 with which the user 18 interacts. The system 800 comprises the cameras 510 for recording the live video images 514 of the real space 10. Microphones 110, 120 may be used to record spatial audio in the real space 10. In this example the outputs from the cameras 510 and the microphones 110, 120 are provided to a central server 702 which comprises a mediated reality generator 722. The mediated reality generator 722 operates with a mediated reality engine 720 local to the user 18 which provides the mediated reality experience to the user 18 by outputting video and audio to the user 18. The mediated reality engine 720 also receives input commands 721 performed by the user 18 within the virtual space 20. These commands 721 provide for user-interactive mediated reality. The selection action 530 is an example of a command 721. These commands 721 are provided back to the mediated reality generator 722 and may result in a change to the mediated reality experience. A positioning system 450 may be present, as previously described, for example positioning the Lavalier microphones 110 worn by persons 11 in the real space 10.

The server 702 also comprises the audio to real space module 700. This module is in communication with the mediated reality generator 722.

The user 18 by performing user-interactive commands in the virtual space 20 is able via the mediated reality engine 720, the mediated reality generator 722 and the audio to real space module 700 to select a sub-set 520 of the persons 11 in the real space 10 for communication by performing a selection action 530 in the virtual space 20. This selection action 530 is interpreted as a command for the audio to real space module 700.

The audio to real space module 700 responds to this command by enabling capture of audio output 540 from the user 18 by microphone 704. The captured audio 544 is provided to the audio to real space module 700 which is configured to direct communication of the captured audio 544 to only the sub-set 520 of the persons 11 in the real space 10. In this way the user 18 is able to communicate by spoken word with selected ones of the persons 11 in the real space 10.

The audio to real space module 700 may achieve directed communication of the captured audio 544 in any suitable manner. In the illustrated example, the system 800 comprises three different routes of communication. In other examples only one of these routes may be used or additional or alternative routes may be used.

In one route, a wireless transmitter 740, for example a Bluetooth transmitter, transmits the captured audio 544 to particular audio output devices 750, associated with the persons 11 in the selected sub-set 520. These audio output devices 750 may, for example, be in-ear loudspeakers (ear-pieces) worn by the persons 11 in the real space 10. The wireless transmission of the captured audio 544 therefore may go to some but not necessarily all of the ear-pieces 552 worn by persons 11 in the real space 10. The captured audio 544 will be transmitted to those persons 11 who are in the sub-set 520 but will not be transmitted to those persons 11 who are not in the sub-set 520.

Another route for directed communication of the captured audio 544 is via directional speakers 730. The directional speakers 730 direct their audio output 732 towards the one or more locations (L1, L2, L3) occupied by the selected sub-set 520 of persons 11.

The audio to real space module 700 may be configured to automatically disable the microphone 704. For example, the audio to real space module 700 may disable capturing of audio output 540 from the user 18 when it has been detected that there has been no audio output 540 from the user 18 for a predetermined time duration, for example 3, 4 or 5 seconds or any other appropriate time period.

It will be appreciated that the audio to real space module 700, and the mediated reality generator and the mediated reality engine 720 may be arranged in different architectures and configurations. For example, all, some or none may be in an apparatus local to the user 18, such as for example head-mounted apparatus 33.

It will be appreciated that the mediated reality engine 720 and mediated reality generator in combination perform the functions described in relation to Fig 4, 5A, 5B. The mediated reality engine 720 and/or mediated reality generator may be provided by the controller 42 of Fig 4.

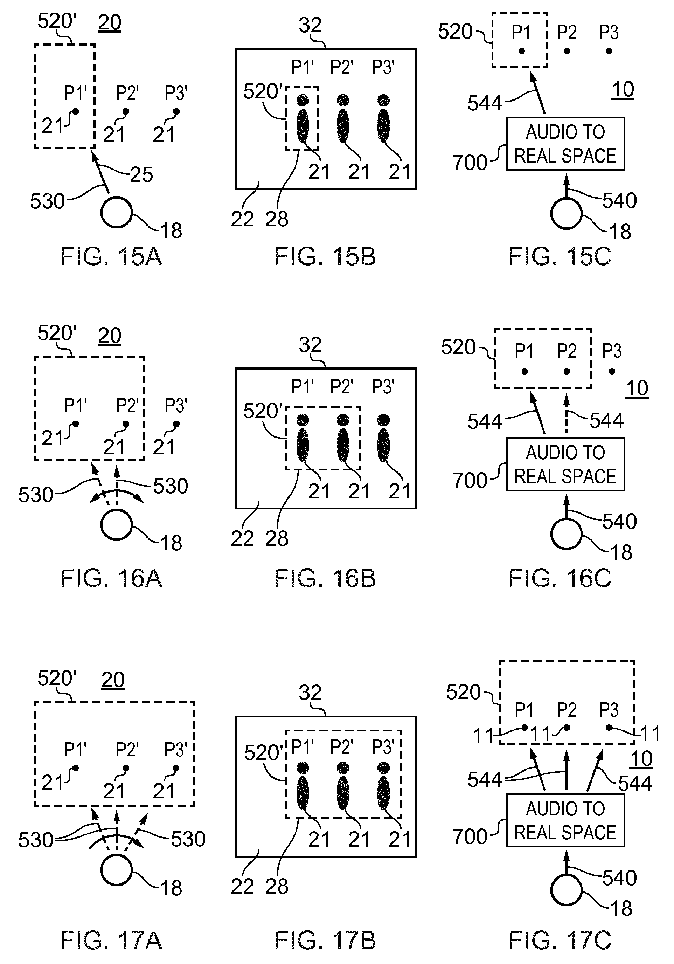

Figs 15 to 17 illustrate alternative selection actions 530 performed by a user 18 in the virtual space 20 to select a sub-set 520 of the persons 11 in the real space 10.

Each of Figs 15A, 16A and 17A illustrate the virtual space 20 comprising as virtual objects 21 the representations (P1', P2', P3') of the persons (P1, P2, P3) in the real space 10. The user 18 selects a sub-set 520' of the virtual objects 21 representing the persons (P1, P2, P3) in the real space 10 for communication. The selection is achieved by performing a selection action 530 in the virtual space 20 by the user 18. In each of these examples, but not necessarily all examples, the selection action 530 involves the user 18 gazing within the virtual space 20 in a particular manner.

Each of Figs 15B, 16B and 17B illustrate a virtual visual scene 22 displayed on the display 32 and corresponding to the virtual space 20 illustrated in the respective figures 15A, 16A, 17A from the user's point of view. The virtual visual scene 22 illustrates the virtual objects 21. These virtual objects 21 are representations (P1', P2', P3') of the persons P1, P2, P3 in the real space 10. In these examples, but not necessarily all examples, the sub-set 520' of the representations of the persons is indicated in the display 22 using a computer-generated visual element 28. The user 18 is therefore able to see which of the persons 11 in the real space 10 have therefore been selected for directed communication because the virtual objects 21 representing those persons are indicated by computer-generated visual element 28.

Each of Figs 15C, 16C and 17C illustrate the directed communication of the captured audio 544 to the sub-set 520 of the persons 11 selected by the selection action 530 in the respective figures 15A, 16A, 17A. In each of these figures an audio to real space module 700 directs communication of the captured audio 544 to the sub-set 520 of the persons 11.

In the example of Fig. 15A, the user 18 performs a selection action 530 that selects a single person 11 in the real space 10 for communication by gazing 530 towards a single virtual object 21 in the virtual space 20 representing that person 11 in the real space 10. In this particular example the user 18 selects the person P1 for communication by gazing 530 towards the representation P1' of that person. Fig. 15B illustrates the virtual visual scene 22 corresponding to the virtual space 20 of Fig. 15A from the user's point of view. The figure illustrates that the sub-set 520' of the representations of the persons consists of only the representation P1'. Fig. 15C illustrates that the directed communication of the captured audio 544 is to only the person P1.

In the example of Fig. 16A, the user 18 performs a selection action 530 that selects two or more persons 11 in the real space 10 for communication by gazing 530 towards two or more virtual objects 21 in the virtual space 20 that represent those persons 11. The selection of a plurality of persons 11 in the real space 10 for communication is achieved by directing the user's gaze 530 intermittently between the virtual objects 21 in the virtual space 20 that represent the selected plurality of persons 11 in the real space 10. In this particular example, the user 18 gazes first at the representation P1' and then at the representation P2' and then back at the representation P1'. This sequence may be repeated. In this way the user 18 indicates that the user 18 selects the persons P1, P2 as members of a sub-set 520 and does not select the person P3 to be a member of the sub-set 520. Fig. 16B illustrates the virtual visual scene 22 corresponding to the virtual space 20 of Fig. 16A from the user's point of view. This figure illustrates that a sub-set 520' of virtual objects 21 representing the persons 11 in the sub set 520 comprises the representations P1' and P2' but does not include the representation P3'. Fig. 16C illustrates that the directed communication of captured audio is directed towards the persons P1, P2 in the sub-set 520 but is not directed towards the person P3 outside the sub-set 520.

In the example of Fig. 17A, the user 18 performs a selection action 530 that selects one or more persons 11 in the real space 10 for communication by gazing 530 towards an area or sector in the virtual space 20 comprising one or more virtual objects 21 representing the one or more persons 11. In this example the user 18 selects the persons 11 in the real space 10 by sweeping their gaze 530 over the area or sector in the virtual space. In the illustrated example, the user 18 sweeps their gaze 530 over the area comprising the virtual objects 21 that are representations (P1', P2', P3') of the persons 11 (P1, P2, P3) in the real space 10. Fig. 17B illustrates the virtual visual scene 22 corresponding to the virtual space 20 of Fig. 17A from the user's point of view. In this example the sub-set 520' of the representations (P1', P2', P3') includes all of the representations that are within the area swept by the user's gaze 530 in Fig 17A. Fig. 17C illustrates that the captured audio 544 is directed to only those persons 11 that are within the sub-set 520 defined by the user's selection action 530 in Fig. 17A.

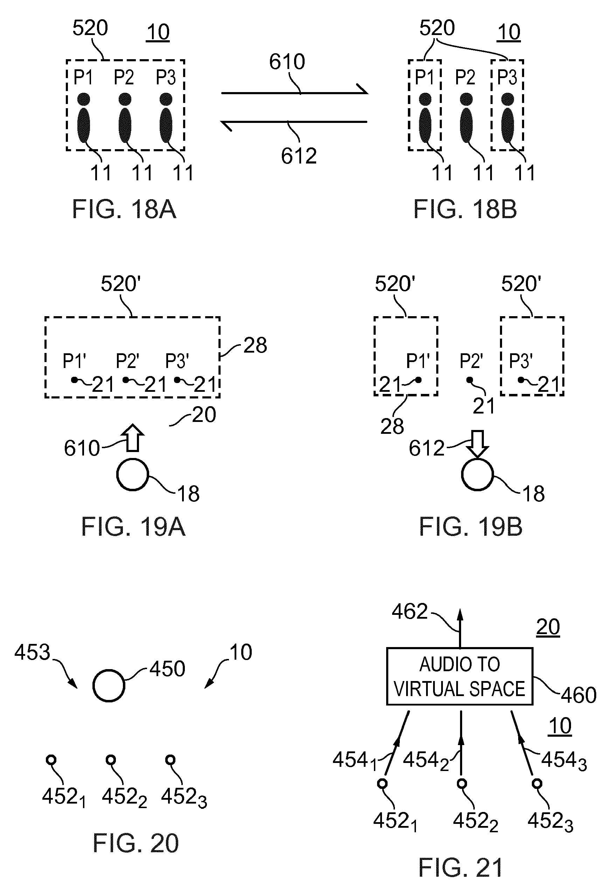

Figs 18A and 18B illustrate that a user 18 may be able to select/deselect persons 11 from the sub-set 520. Both of Figs 18A and 18B illustrate the real space 10 comprising the persons 11 (P1, P2, P3). In Fig. 18A the sub-set 520 which defines the persons 11 who receive the captured audio 544 comprises persons P1, P2, P3. In Fig. 18B, the sub-set 520 which defines the persons 11 who receive the captured audio 544 comprises the person P1 and the person P3 but does not include the person P2.

The user 18 is able to deselect one or more persons 11 in the sub-set 520 by performing a gesture 610. The one or more persons are removed from the sub-set 520. The user 18 is able to reselect or select one or more persons 11 for inclusion in the sub-set 520 by performing a gesture 612. The one or more persons are added to the sub-set 520.

It will be seen that the gesture 610 transitions the sub-set 520 between that illustrated in Fig. 18A, for example, and that illustrated in Fig. 18B and deselects one or more persons 11. It will be seen that the gesture 612 transitions between the sub-set 520 illustrated in Fig. 18B and the sub-set 520 illustrated in Fig. 18A and will augment the sub-set 520 with one or more additional persons 11.

Fig. 19A illustrates an example of a gesture 610 suitable for deselecting a person 11 from the sub-set 520. In this example, the virtual space 20 has a sub-set 520' that corresponds to the sub-set 520 in the real space 10 of Fig. 18A. The virtual space 20 has a virtual object 21 representing each of the persons 11.The sub-set 520' includes a virtual object 21 representing each of the persons 11 within the sub-set 520. Therefore each of the persons P1, P2, P3 has a corresponding representation P1', P2', P3' within the virtual space 20. The sub-set 520' may be visually represented in a display of the virtual visual scene 22 using a computer generated visual element 28 for example as described in relation to Figs 15B, 16B, 17B. The user 18 may therefore be able to see which virtual objects 21 are within the sub-set 520' and therefore know which persons 11 are within the sub-set 520.

In this example, the user 18 deselects the person P2 by performing a push gesture 610 within the virtual space 20 towards the virtual object 21 that is a representation P2' of the person P2 in the real space 10.

Fig. 19B illustrates an example of a gesture 612 suitable for selecting a person 11 for inclusion in the sub-set 520. In this example, the virtual space 20 has a sub-set 520' that corresponds to the sub-set 520 in the real space 10 of Fig. 18B. The virtual space 20 has a virtual object 21 representing each of the persons 11. Therefore each of the persons P1, P2, P3 has a corresponding representation P1', P2', P3' within the virtual space 20. The sub-set 520' includes a virtual object 21 representing each of the persons 11 within the sub-set 520. The sub-set 520' may be visually represented in a display of the virtual visual scene 22 using a computer generated visual element 28 for example as described in relation to Figs 15B, 16B, 17B. The user 18 may therefore be able to see which virtual objects 21 are within the sub-set 520' and therefore know which persons 11 are within the sub-set 520.

In this example, the user 18 selects the person P2 by performing a pull gesture 612 within the virtual space 20 away from the virtual object 21 that is a representation P2' of the person P2 in the real space 10. The user 18 is therefore able to select, which of one or more of the persons P1-P2 the user enables the audio with push and pull gestures- push for deselect and pull for select.

In the foregoing examples, reference has been made to a computer program or computer programs. A computer program, for example either of the computer programs 48, 416 or a combination of the computer programs 48, 416 may be configured to perform the method 500.

Also as an example, an apparatus 30, 400 may comprises:
at least one processor 40, 412; and
at least one memory 46, 414 including computer program code
the at least one memory 46, 414 and the computer program code configured to, with the at least one processor 40, 412, cause the apparatus 430, 00 at least to perform:
providing user-interactive, mediated reality by providing live display of a virtual visual scene of a virtual visual space to a user via a display, wherein the virtual visual space, comprising virtual objects, is at least partially defined by live video images of a real space, comprising persons, captured by multiple video cameras simultaneously from different perspectives;
   enabling the user to control a perspective determining the displayed virtual visual scene;
   enabling the user to select a sub-set of the persons in the real space for communication by performing a selection action in the virtual space; and
   enabling capturing of audio output from the user and directed communication of the captured audio to the sub-set of the persons but not other persons in the real space.

Fig 11A illustrates a block 506 that enables selection of a sub-set of objects in a real space 10 for controlled communication in response to actions of a particular person.

Whereas in the examples of Figs 11B to 19B, the block 506 enables the selection of a sub-set of audio output objects for providing audio output in the real space 10, in the examples illustrated in Figs 20 & 21 this block 506 enables the selection of a sub-set of audio input objects 452, such as microphones, for recording audio input from the real space 10. The microphones may be static or movable microphones, for example Lavalier or close-up microphones.

Whereas in the examples of Figs 11B to 19B, the block 506 enables this selection as a result of action within the virtual space 20 by a user (e.g. a remote director), in the examples illustrated in Figs 20 & 21 the block 506 enables this selection as a result of a selection action 453 performed within the real space 10 by a particular person 450 (e.g. a conductor).

The action 453 may, for example, be a selection action performed while the conductor 450 conducts a choir or orchestra. The selection action 453 may be for example a standard hand or arm gesture used by a conductor 450 to select a part of the choir or orchestra and consequently select the audio input objects 452 associated with that part of the choir or orchestra. The gesture may be detected by a gesture detector.

The selection action 453 may, for example, be a different action performed while the conductor 450 conducts a choir or orchestra. The selection action 453 may for example comprise a directed gaze by the conductor 450 towards a part of the choir or orchestra to select that part of the choir or orchestra and consequently select the audio input objects 452 associated with that part of the choir or orchestra. The gaze direction may be detected by a gaze detector.

Fig 11A illustrates a block 508 that enables controlled communication to and/or from the sub-set of objects.

Whereas in the examples of Figs 11B to 19B, this block 508 enables controlled (selective) communication to a sub-set of audio output objects, in the examples illustrated in Figs 20 & 21 this block 508 enables controlled communication from a sub-set of audio input objects 452 rendered as spatial audio.

Fig 20 illustrates an example of a real space 10 comprising a particular person 450 (e.g. a conductor) and multiple audio input objects 452, such as microphones.

The particular person 450 (e.g. a conductor) performs a selection action 453 in the real space 10. This causes the selection of a sub-set of audio input objects 452 recording audio input from the real space 10.

Fig. 21 illustrates an example of the consequences of the particular person 450 performing a selection action 453 in the real space 10. In this example, an audio to virtual space module 460 captures audio 454 from audio input objects 452 in the real space 10 and enables controlled communication of audio 454 from a sub-set of audio input objects 452 to be rendered as spatial audio 462 in the virtual space 20. Only audio 454 recorded by the sub-set of audio input objects 452 is rendered as spatial audio 462.

The audio to virtual space module 460 may, for example, perform selective time-divided communication from the sub-set of audio input objects 452. For example at a first time, the rendered spatial audio 462 produced by the audio to virtual space module 460 may be controlled to include audio 454 recorded by a first one or more audio input objects 452 in the sub-set of audio input objects 452 but not audio recorded by a second one or more audio input objects 452 in the sub-set of audio input objects 452 and at a second time, the rendered spatial audio 462 produced by the audio to virtual space module 460 may be controlled to include audio 454 recorded by the second one or more audio input objects 452 in the sub-set of audio input objects 452 but not audio 454 recorded by the first one or more audio input objects 452 in the sub-set of audio input objects 452. This approach may be used to prevent cross-talk from audio 454 recorded at the first one or more audio input objects 452 to the second one or more audio input objects 452 and cross-talk from audio 454 recorded at the second one or more audio input objects 452 to the first one or more audio input objects 452.

The audio to virtual space module 460 may, for example, perform different spatial audio processing of audio 454 recorded by audio input objects 452 of the sub-set of audio input object 452 depending upon whether the input audio object 452 is representative of a primary (main) sound source or representative of a secondary (background) sound source. If an input audio object 452 in the sub-set of audio input objects 452 represents a primary sound source, then audio 454 communicated from that audio input object 452 is rendered as precise spatial audio 462. That is, audio 454 from that 'primary' audio input object 452 is rendered as a rendered sound object at a precise location within a rendered sound scene. If input audio objects 452 in the sub-set of audio input objects 452 represent secondary sound sources, then audio 454 communicated from those secondary audio input objects 452 are rendered as blurred spatial audio 462. That is, audio 454 from those secondary audio input objects 452 are rendered as diffuse sound without a precise location within a rendered sound scene, for example, as spatial audio 462 produced by mixing audio 454 from those audio input objects.

The computer program 48, 416 may arrive at the apparatus 30,400 via any suitable delivery mechanism. The delivery mechanism may be, for example, a non-transitory computer-readable storage medium, a computer program product, a memory device, a record medium such as a compact disc read-only memory (CD-ROM) or digital versatile disc (DVD), an article of manufacture that tangibly embodies the computer program 48, 416. The delivery mechanism may be a signal configured to reliably transfer the computer program 48, 416. The apparatus 30, 400 may propagate or transmit the computer program 48, 416 as a computer data signal. Fig 10 illustrates a delivery mechanism 430 for a computer program 416.

It will be appreciated from the foregoing that the various methods 500 described may be performed by an apparatus 30, 400, for example an electronic apparatus 30, 400.

The electronic apparatus 400 may in some examples be a part of an audio output device 300 such as a head-mounted audio output device or a module for such an audio output device 300. The electronic apparatus 400 may in some examples additionally or alternatively be a part of a head-mounted apparatus 33 comprising the display 32 that displays images to a user.

In some examples, the placement of the head-mounted apparatus 33 onto the head of a user may cause the system to perform or to be able to perform the method 500 illustrated in Fig 11B. That is, while the head-mounted apparatus 33 is not placed on a head of a user, the method 500 is not operational. When the head-mounted apparatus is placed on a head of a user, the method 500 becomes operational enabling control using first perspective, user-interactive, mediated reality (virtual reality or augmented reality).

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks, steps and processes illustrated in the Figs 11-19B may represent steps in a method and/or sections of code in the computer program. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The controller 42 or controller 410 may, for example be a module. The apparatus may be a module. The display 32 may be a module.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed. For example, although embodiments of the invention are described above in which multiple video cameras 510 simultaneously capture live video images 514, in other embodiments it may be that merely a single video camera is used to capture live video images, possibly in conjunction with a depth sensor.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method comprising:
enabling selection of a sub-set of objects in a real space for controlled communication in response to actions of a particular person; and
enabling controlled communication to and/or from the sub-set of objects.

2. A method as claimed in claim 1, comprising:
providing user-interactive, mediated reality by providing live display of a virtual visual scene of a virtual visual space to a user via a display, wherein the virtual visual space, comprising virtual objects, is at least partially defined by live video images of a real space comprising objects and captured by multiple video cameras simultaneously from different perspectives; enabling the user to control a perspective determining the displayed virtual visual scene;
wherein enabling selection of a sub-set of the objects in the real space for controlled communication in response to actions of a particular person comprises: enabling the user to select a sub-set of the objects in the real space for communication by performing a selection action in the virtual space; and
wherein enabling controlled communication to and/or from the sub-set of objects comprises:
enabling selective communication between the user and the sub-set of objects but not other objects in the real space.

3. A method as claimed in claim 1 or 2, wherein the objects are persons captured by multiple video cameras simultaneously from different perspectives;
Wherein enabling the user to select a sub-set of the objects in the real space for communication by performing a selection action in the virtual space comprises:
enabling the user to select a sub-set of the persons in the real space for communication by performing the selection action in the virtual space; and
wherein enabling selective communication between the user and the sub-set of objects but not other objects in the real space comprises:
capturing of audio output from the user and directed communication of the captured audio to the sub-set of the persons but not other persons in the real space.

4. A method as claimed in claim 3, wherein enabling directed communication of the captured audio to the sub-set of persons in the real space comprises causing wireless transmission of the captured audio to a sub-set of ear-pieces worn by persons in the real space and/or comprises controlling directional speakers to be directed towards one or more locations occupied by the selected sub-set of persons.

5. A method as claimed in claim 3 or 4, comprising automatically disabling capturing of audio output from the user when it has been detected that there has been no audio output from the user for a predetermined time duration.

6. A method as claimed in any of claims 3, 4 or 5, wherein enabling the user to select a sub-set of the persons in the real space for communication comprises:
using, as the selection action, a direction in which the user gazes within the virtual space;
enabling the user to select a single person in the real space for communication by gazing towards a virtual object in the virtual space representing that person in the real space;
enabling the user to select a plurality of persons in the real space for communication by directing their gaze intermittently between the virtual objects in the virtual space that represent those persons in the real space;
enabling the user to select a sector or area of the real space for communication by selecting, using their gaze, a sector or area of the virtual space.

7. A method as claimed in any of claims 3 to 6, further comprising generating one or more computer-generated visual elements in the virtual visual scene to indicate those virtual objects in the visual scene that represent the selected sub-set of persons in the real space for communication.

8. A method as claimed in any of claims 3 to 7, further comprising enabling the user to deselect one or more persons in the sub-set of the persons in the real space for communication by performing a gesture.

9. A method as claimed in claim 8, wherein the deselection of a person for communication is indicated to the user via generation of an computer-generated visual element in the virtual visual scene in relation to the virtual object representing the deselected person.

10. A method as claimed in claim 1 or 2, wherein the objects are microphones in the real space;
wherein enabling the user to select a sub-set of the objects in the real space for communication by performing a selection action in the virtual space comprises:
enabling the user to select a sub-set of the microphones in the real space for communication by performing the selection action in the virtual space; and
wherein enabling selective communication between the user and the sub-set of persons but not other objects in the real space comprises:
capturing of audio output from the sub-set of the microphones but not other microphones in the real space and communication of the captured audio to the user.

11. A method as claimed in claim 1 or 2, wherein enabling selection of a sub-set of the objects in the real space for controlled communication in response to actions of a particular person comprises: enabling the particular person to select a sub-set of the objects in the real space for controlled communication by performing a selection action in the real space.

12. A method as claimed in claim 11, wherein enabling controlled communication to and/or from the sub-set of objects
comprises: enabling selective time-divided communication from the sub-set of objects or comprises:
if an object in the sub-set of objects represents a primary sound source, rendering audio communicated from that object as audio from a location in a rendered sound scene dependent upon a location of that object in a recorded sound scene; and
if objects in the sub-set of objects represent secondary sound sources, rendering audio communicated from those object as mixed audio
or comprises:
if an object in the sub-set of objects represents a primary sound source, rendering audio communicated from that object with precise spatial audio; and
if objects in the sub-set of objects represent secondary sound sources, rendering audio communicated from those objects as blurred spatial audio.

13. A method as claimed in claim 1, 11 or 12, wherein actions of a particular person are conductor actions to a choir or orchestra.

14. A method as claimed in any preceding claim, wherein the method is enabled via a see-video head-mounted apparatus configured for first person perspective-mediated reality while listening to the rendered sound objects as spatially rendered audio.

15. An apparatus comprising means for performing the method as claimed in one or more of claims 1 to 14.
